# EUROPEAN PATENT SPECIFICATION

(11) **EP 3 118 422 B1**
(45) Date of publication and mention of the grant of the patent: **05.12.2018**
(21) Application number: 15177343.9
(22) Date of filing: 17.07.2015
(51) Int. Cl.: F23R 3/00, G01M 15/14, F01D 21/00, G01N 25/72

(54) **CALIBRATION BLOCK FOR INSPECTION OF GAS TURBINE COMPONENT AND MANUFACTURING METHOD**
KALIBRIERUNGSBLOCK ZUR INSPEKTION EINER GASTURBINENKOMPONENTE UND HERSTELLUNGSVERFAHREN
BLOC D'ÉTALONNAGE POUR L'INSPECTION D'UN COMPOSANT DE TURBINE À GAZ ET PROCÉDÉ DE FABRICATION

(43) Date of publication of application: 18.01.2017
(73) Proprietor: Ansaldo Energia IP UK Limited, London W1G 9DQ (GB)
(72) Inventor: Tudosa, Petrica, 5415 Nussbaumen (CH)
(74) Representative: Studio Torta S.p.A.

(56) References cited:
- EP-A1- 1 916 517
- US-B1- 8 759 770

## Description

### BACKGROUND

### Field of Endeavor

The present disclosure relates generally to inspection method and device, more particularly, to a calibration block and method of making the calibration block for inspection of gas turbine components.

### Brief Description of the Related Art

Gas turbine components, such as, EV liners (EV=Environmental) of a combustion chamber in a gas turbine, are generally adapted to protect combustor walls of the combustion chamber from the hot gases. Such EV liners are generally subject to damage that occurs during usage, includes component cracking, oxidation and corrosion. The EV liners with such damages are risk to use, and accordingly, there exists a need identify the EV liners with comparatively greater damages and scrape such EV liners.

EP 1 916 517 A1 discloses a method of inspecting components of a gas turbine using a calibration block that replicates structural defects. Another example of a known method of inspection is known from US 8 759 770 B1.

### SUMMARY

The present disclosure discloses a calibration block and method of making the calibration block for inspection of gas turbine components, such as EV liners, that will be presented in the following simplified summary to provide a basic understanding of one or more aspects of the disclosure that are intended to overcome the discussed drawbacks, but to include all advantages thereof, along with providing some additional advantages. This summary is not an extensive overview of the disclosure. It is intended to neither identify key or critical elements of the disclosure, nor to delineate the scope of the present disclosure. Rather, the sole purpose of this summary is to present some concepts of the disclosure, its aspects and advantages in a simplified form as a prelude to the more detailed description that is presented hereinafter.

A general object of the present disclosure is to provide a calibration block and method of making the calibration block for inspection of gas turbine components, such as EV liners.

In one aspect of the present disclosure, a method for manufacturing a calibration block for inspection of a gas turbine component is provided. The method includes: screening the gas turbine component made of predefined material and coated with a thermal barrier, using an infrared thermography, to define an area with defects on or below the thermal barrier; cutting the area with the defects from the gas turbine component; configuring a substrate having a base material with first and second opposite sides, and the first side of the base material having a bond coating and a thermal barrier coating, wherein the base materials of the substrate and the gas turbine component are same, and wherein the thermal barriers coated on the substrate and the gas turbine component are same; forming artificial defects in the substrate having holes and notches; and implanting the cut area with the defects from the gas turbine component on to the substrate along with the artificial defects.

The method step of configuring the substrate further includes: providing the base material of HASTELLOY X alloy of thickness having a range between 3.5mm to 6mm; coating the base material on the first side thereof with the bond coating of Nickel Alloy having a range between 198µm to 200µm; and coating the base material on the first side over the bond coating with the thermal barriers coating having a range between 1450µm to 1750µm.

The method step of forming artificial defects in the form of holes further includes: drilling the holes on the base material extending from the second side to the first side, and excluding the bond and thermal corrosion coating layers.

The method step of forming artificial defects in the form of the notches further includes: drilling the holes on the base material extending from the second side to the first side, and excluding the bond and thermal corrosion coating layers; and filling the holes at least from thread screw or gel so as the screw or the gel extends above a height of the substrate surface to replicate the artificial defects in the form of the notches.

The method step of implanting the cut area includes: drilling the holes on the base material extending from the second side to the first side, and excluding the bond and thermal corrosion coated layers; and filling the holes from the cut area with the defects from the gas turbine component to replicate original defects.

In one aspect of the present disclosure, a calibration block for inspection of a gas turbine component is provided. The calibration block includes a substrate having a base material with first and second opposite sides, a bond layer coated on the first side of the base layer, and a thermal barrier layer coated on the first side of the base layer above the Nickel Alloy layer. The calibration block includes artificial defects configured in the substrate in the form of holes and notches, wherein the holes on the base material extends from the second side to the first side, excluding the bond and thermal corrosion coated layers, and wherein at least some of the holes are adapted to incorporate crews or gel therein so as the screws or gel protrudes above a height of the substrate to form the notches. The calibration block further includes in at least some of the holes, a cut portion of original defects of the gas turbine components to replicate original defects on the substrate.

In further aspect of the present disclosure, a method for inspection of the gas turbine component using the calibration block, as disclosed above is provided. The method includes: providing the calibration block; comparing defects from the gas turbine component with the original defects of the implanted area of gas turbine component and the artificial defects, on the calibration block, using the infrared thermography; analysing, whether or not, the gas turbine component with the defects satisfies a predetermined technical requirement, if the predetermined technical requirement is satisfied, the gas turbine component is utilised in the gas turbine, otherwise, the gas turbine component is reconditioned or scraped.

These together with the other aspects of the present disclosure, along with the various features of novelty that characterize the present disclosure, are pointed out with particularity in the present disclosure. For a better understanding of the present disclosure, its operating advantages, and its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will better understood with reference to the following detailed description and claims taken in conjunction with the accompanying drawing, wherein like elements are identified with like symbols, and in which:
FIGS. 1A and 1B illustrate both sides of a calibration block, in accordance with an exemplary embodiment of the present disclosure;
FIGS. 2A and 2B illustrate side cross sectional views of the calibration block, in accordance with an exemplary embodiment of the present disclosure;
FIG. 3 illustrates a calibration block with various defect positions, in accordance with various exemplary embodiments of the present disclosure; and
FIG. 4 illustrates gas turbine components where the calibration block may be utilized for inspection, in accordance with various exemplary embodiments of the present disclosure.

Like reference numerals refer to like parts throughout the description of several views of the drawings.

### DETAILED DESCRIPTION OF EXEMPLARY EMBODIMENTS

For a thorough understanding of the present disclosure, reference is to be made to the following detailed description, including the appended claims, in connection with the above-described drawings. In the following description, for purposes of explanation, numerous specific details are set forth in order to provide a thorough understanding of the present disclosure. It will be apparent, however, to one skilled in the art that the present disclosure can be practiced without these specific details. In other instances, structures and devices are shown in block diagrams form only, in order to avoid obscuring the disclosure. Reference in this specification to "one embodiment," "an embodiment," "another embodiment," "various embodiments," means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but may not be of other embodiment's requirement.

Although the following description contains many specifics for the purposes of illustration, anyone skilled in the art will appreciate that many variations and/or alterations to these details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure. Further, the relative terms used herein do not denote any order, elevation or importance, but rather are used to distinguish one element from another. Further, the terms "a," "an," and "plurality" herein do not denote a limitation of quantity, but rather denote the presence of at least one of the referenced item.

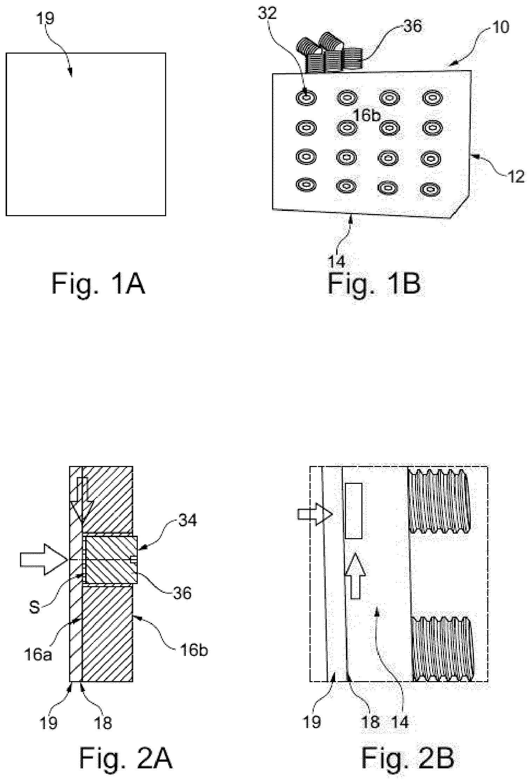

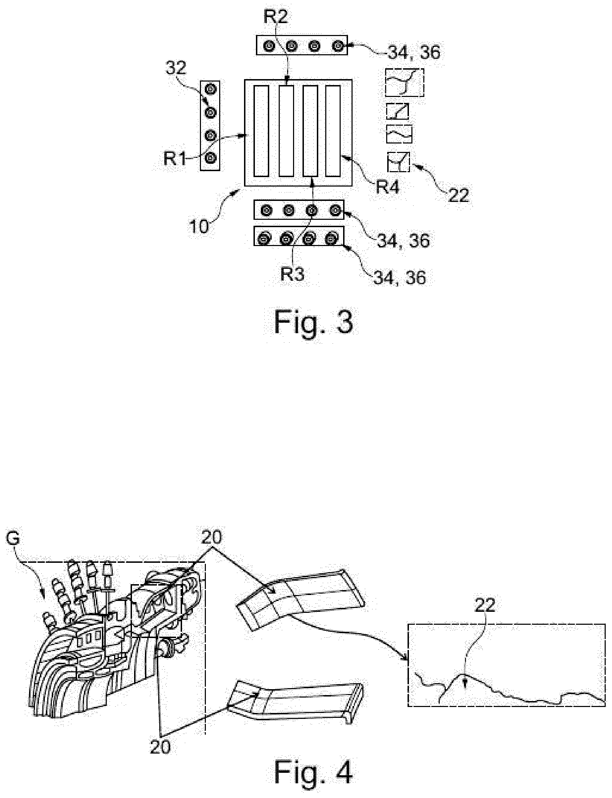

Referring to FIGS. 1A to 4, to describe a calibration block (10) (shown in FIGS. 1A to 3) and a method of making the same and that such calibration block (10) may be utilized for inspection of a gas turbine component (20), such as EV liners as shown in FIG. 4, in a gas turbine 'G'.

The calibration block (10) includes a substrate (12). The substrate (12) includes a base material (14) with first (16a) and second (16b) opposite sides. The substrate (12) further includes a bond layer (18) and a thermal barrier layer (19). The bond layer (18) may be coated on the first side (16a) of the base material (14), and the thermal barrier layer (19) may be coated on the first side (16a) of the base material (14) and above the bond layer (18). The calibration block (10) further includes artificial defects configured in the substrate (12) in the form of holes (32) and notches (34). Specifically, the holes (32) on the base material (14) extend from the second side (16b) to the first side (16a), excluding the bond and thermal corrosion coated layers (18), (19), coated on the first side (16a), as shown in FIG. 2B. Further, at least some of the holes (32) are adapted to incorporate screws or gel (36) therein protruding above a height of the substrate (12) to form the notches (34). Furthermore, at least some of the holes (32) are adapted to incorporate a cut portion (22) of original defects of the gas turbine components (20) therein to replicate original defects on the substrate (12).

In an example embodiment, the substrate (12) includes the base material (14) of HASTELLOY X alloy of thickness having a range between 3.5mm to 6mm. Further, the bond layer (18) of Nickel Alloy may be in a range between 198µm to 200µm. Furthermore, the thermal barriers layer (19) may be in the range between 1450µm to 1750µm. The HASTELLOY X is nickel base super alloy (along with chromium-iron-molybdenum alloy) that has excellent resistance to reducing and carburizing atmospheres, making it suitable for furnace components.

As illustrated in FIG. 3, an example depiction of the original and artificial defect positions on the calibration block (10) is shown. The block (10) is shown to include four rows (R1-R4) of defects in the form of holes (32), notches (34) and implemented cut portion (22) of original defects from the gas turbine components (20). Row R1 includes holes (32). Rows R2 and R3 includes holes with treads wherein screws or gel (36) are inserted protruding above a height of the substrate (12) to form the notches (34). Furthermore, row R4 includes the cut portion (22) of original defects of the gas turbine components (20) inserted in the holes to replicate original defects on the substrate (12).

In an embodiment, the calibration block (10) may be made by following the below steps. However, the steps are not limited to as disclosed and may be changed in order as per the requirement. For configuring the calibration block (10), the gas turbine component (20) made of predefined material and coated with a thermal barrier, is screened using an infrared thermography, to define an area, such as area 22, with original defects on or below the thermal barrier layer thereof. Further, such area 22 may be cut from the gas turbine component (20) for being incorporated in the block (10) to be used as reference original defects from the gas turbine components (20), such the EV liners.

Further, the block (10) is being configured by initially forming the substrate (12). The substrate (12) may be formed by the base material (14) where the bond coating (18) and the thermal barrier coating (19) may be done on the first side (16a) thereof. These coating provide resistance to corrosion and heat of the combustion chamber of the gas turbine 'G'. Importantly, the base materials of the substrate (12) and the gas turbine component (20) are same, and the thermal barriers on the substrate (12) and the gas turbine component (20) are same, for enabling the calibration block (10) to replicate same characteristics as the gas turbine components (20).

Furthermore, the substrate (12) is formed with the artificial defects in the substrate (12) having the holes (32) and the notches (34). In one embodiment, the hole (32) may be drilled on the base material (14) extending from the second side (16b) to the first side (16a), and excluding the bond and thermal corrosion coated layers (18), (19). The notches (34) may be formed by filling some of the drilled holes (32) with at least from threaded screw or gel (36), both are referred by same reference number herein. For incorporating the threaded screws in the hole (32) to obtain the notches (34), the holes (32) must be threaded, where the threaded screws (36) may be screwed, leaving a clearance space 'S' at the bottom of the substrate that enable the screw to extend slightly above a height of the surface of the substrate (14) to replicate the artificial defects in the form of the notches (34). Further, the gel (36) may also be placed in the holes (32) instead of threaded screw depending upon the requirement such that it extends slightly above a height of the surface of the substrate (14) to replicate the artificial defects in the form of the notches (34). For incorporating the gel (36) in the holes (32), the holes (32) may or may not be threaded, preferably not threaded.

Moreover, at least some of the holes (32) may also be adapted to incorporate the cut portion (22) of the original defects of the gas turbine components (20) therein to replicate original defects on the substrate (12) and obtain the calibration block (10) with original as well as artificial defects to be used as reference block to identify the defects in the gas turbine components (20).

In operation of inspection of the gas turbine component (20), the calibration block (10) as described above is provided to inspect the gas turbine component (20). The defects from the gas turbine components (20) is compared with the original defects and artificial defects on the calibration block (10), using the infrared thermography. Thereafter, analysing, whether or not, the gas turbine component (20) with the defects, satisfies a predetermined technical requirement, such as defects on the gas turbine components (20) are such that it can be used in the gas turbine without any problem or not. If the predetermined technical requirement is satisfied, the gas turbine component (20) may be used in the gas turbine; otherwise, the gas turbine component (20) may be reconditioned/ scraped. The predetermined technical requirement may be one or more parameters which allow the gas turbine with the gas turbine component (20) to work in most economical and efficient fashion as per the industrial requirement, without affecting working environment. In an embodiment, the predetermined technical requirement may be such minimum defects in the gas turbine component (20) that do not affect the working environment and has less risk when used with the gas turbine.

The calibration block of the present disclosure is advantageous in various scopes such as described above. The calibration block may be utilized as standard for analysing all the defects in the gas turbine components in time efficient and economical manner. The block may reduce time and workload of reconditioning and analysing the defects in the gas turbine components.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, to thereby enable others skilled in the art to best utilize the present disclosure and various embodiments with various modifications as are suited to the particular use contemplated. It is understood that various omission and substitutions of equivalents are contemplated as circumstance may suggest or render expedient, but such are intended to cover the application or implementation without departing from the scope of the claims of the present disclosure.

### REFERENCE NUMERAL LIST

- 10: Calibration Block
- 12: Substrate
- 14: Base material
- 16a, 16b: First and second opposite sides
- 18: Bond layer
- 19: Thermal barrier layer
- 20: Gas turbine component
- 22: Cut portion
- 30: Artificial defects
- 32: Holes
- 34: Notches
- 36: Screw/gel
- R1-R4: Rows
- 'S': Clearance space
- 'G': Gas Turbine

## Claims

1. A method for manufacturing a calibration block (10) for inspection of a gas turbine component (20), the method is **characterized in that** it comprises:
screening the gas turbine component (20) made of predefined material and coated with a thermal barrier, using an infrared thermography, to define an area with defects on or below the thermal barrier;
cutting the area (22) with the defects from the gas turbine component (20);
configuring a substrate (12) having a base material (14) with first (16a) and second (16b) opposite sides, and the first side (16a) of the base material (14) having a bond coating (18) and a thermal barrier coating (19), wherein the base materials of the substrate (12) and the gas turbine component (20) are same, and wherein the thermal barriers on the substrate (12) and the gas turbine component (20) are same;
forming artificial defects in the substrate (12) having holes (32) and notches (34);
implanting the cut area (22) with the defects from the gas turbine component (20) on to the substrate (12) along with the artificial defects.

2. The method for manufacturing the calibration block (10) of claim 1, wherein configuring the substrate (12) further comprises:
providing the base material (14) of thickness having a range between 3.5mm to 6mm;
coating the base material (14) on the first side (16a) thereof with the bond coating (18), the bond coating (18) being of a Nickel Alloy and having a range between 198µm to 200µm; and
coating the base material (14) on the first side (16a) over the bond coating (18) with the thermal barriers (19) having a range between 1450µm to 1750µm.

3. The method for manufacturing the calibration block (10) of claim 1, wherein forming artificial defects in the form of holes (32) further comprises:
drilling the holes (32) on the base material (14) extending from the second side (16b) to the first side (16a), and excluding the bond and thermal corrosion coated layers (18), (19).

4. The method for manufacturing the calibration block (10) of claim 1, wherein forming artificial defects in the form of the notches (34) further comprises:
drilling the holes (32) on the base material (14) extending from the second side (16a) to the first side (16a), and excluding the bond and thermal corrosion coated layers (18), (19); and
filling the holes (32) at least from thread screw or gel (36) to extend above a height of the substrate (14) surface to replicate the artificial defects in the form of the notches (34).

5. The method for manufacturing the calibration block (10) of claim 1, wherein implanting the cut area (22) comprises:
drilling the holes (32) on the base material (14) extending from the second side (16b) to the first side (16a), and excluding the bond and thermal corrosion coated layers (18), (19); and
filling the holes (32) from the cut area (22) with the defects from the gas turbine component to replicate original defects.

6. A calibration block (10) for inspection of a gas turbine component (20), the calibration block (10) is **characterized in that** it comprises:
a substrate (12) having
a base material (14) with first (16a) and second (16b) opposite sides,
bond layer (18) of a Nickel Alloy coated on the first side (16a) of the base material (14), and
thermal barrier layer (19) coated on the first side (16a) of the base material (14) above the Nickel Alloy bond layer (18);
artificial defects configured in the substrate (12) in the form of holes (32) and notches (34), wherein the holes (32) on the base material (14) extends from the second side (16b) to the first side (16a), excluding the bond and thermal corrosion coated layers (18), (19), and, wherein at least some of the holes (32) incorporate screws or gel (36) therein protruding above a height of the substrate (12) to form the notches (34); and
At least some of the holes (32) incorporate a cut portion (22) of original defects of the gas turbine components (20) therein to replicate original defects on the substrate (12).

7. The calibration block (10) as per claim 6, wherein the substrate (12) comprises the base material (14) of thickness having a range between 3.5mm to 6mm;
the bond layer (18) of Nickel Alloy having a range between 198µm to 200µm; and
thermal barriers layer (19) having a range between 1450µm to 1750µm.

8. A method for inspection of the gas turbine component (20) using the calibration block (10) of claim 6 to 7, the method comprising:
providing the calibration block (10);
comparing defects from the gas turbine component (20) with the original defects of the implanted area of gas turbine component (20) and the artificial defects, on the calibration block (10), using the infrared thermography;
analysing, whether or not, the gas turbine component (20) with the defects, satisfies a predetermined technical requirement,
if the predetermined technical requirement is satisfied, the gas turbine component (20) is utilised in the gas turbine,
if the predetermined technical requirement is not satisfied, the gas turbine component (20) is reconditioned/scraped.

## Patentansprüche

1. Verfahren zum Herstellen eines Kalibrierblocks (10) zur Prüfung einer Gasturbinenkomponente (20), wobei das Verfahren **gekennzeichnet ist durch**
Überprüfen der Gasturbinenkomponente (20), die aus einem vorgegebenen Material hergestellt ist und mit einer Wärmesperre beschichtet ist, unter Verwendung einer Infrarotthermographie, um einen Bereich mit Defekten an oder unter der Wärmesperre zu definieren;
Ausschneiden des Bereichs (22) mit den Defekten aus der Gasturbinenkomponente (20);
Konfigurieren eines Substrats (12), das ein Grundmaterial (14) mit einer ersten (16a) und einer ihr gegenüberliegenden zweiten (16b) Seite besitzt, wobei die erste Seite (16a) des Grundmaterials (14) eine Bindebeschichtung (18) und eine Wärmesperrbeschichtung (19) besitzt, das Grundmaterial des Substrats (12) und der Gasturbinenkomponente (20) gleich ist und die Wärmesperren am Substrat (12) und der Gasturbinenkomponente (20) gleich sind;
Bilden künstlicher Defekte im Substrat (12), das Löcher (32) und Kerben (34) besitzt; und
Einsetzen des ausgeschnittenen Bereichs (22) mit den Defekten aus der Gasturbinenkomponente (20) in das Substrat (12) zusammen mit den künstlichen Defekten.

2. Verfahren zum Herstellen eines Kalibrierblocks (10) nach Anspruch 1, wobei das Konfigurieren des Substrats (12) ferner Folgendes umfasst:
Bereitstellen des Grundmaterials (14) mit einer Dicke im Bereich von 3,5 mm bis 6 mm;
Beschichten des Grundmaterials (14) an seiner ersten Seite (16a) mit der Bindebeschichtung (18), wobei die Bindebeschichtung (18) aus einer Nickellegierung besteht und einen Bereich von 198 µm bis 200 µm besitzt; und
Beschichten des Grundmaterials (14) an der ersten Seite (16a) über die Bindebeschichtung (18) mit der Wärmesperrbeschichtung (19), die einen Bereich von 1450 µm bis 1750 µm besitzt.

3. Verfahren zum Herstellen eines Kalibrierblocks (10) nach Anspruch 1, wobei das Bilden künstlicher Defekte in Form von Löchern (32) ferner Folgendes umfasst:
Bohren der Löcher (32) in das Grundmaterial (14) von der zweiten Seite (16b) zur ersten Seite (16a) verlaufend und unter Ausschluss der Bindeschicht (18) und der Wärmesperrschicht (19).

4. Verfahren zum Herstellen eines Kalibrierblocks (10) nach Anspruch 1, wobei das Bilden künstlicher Defekte in Form von Kerben (34) ferner Folgendes umfasst:
Bohren der Löcher (32) in das Grundmaterial (14) von der zweiten Seite (16b) zur ersten Seite (16a) verlaufend und unter Ausschluss der Bindeschicht (18) und der Wärmesperrschicht (19); und
Füllen der Löcher (32) mindestens mit einem Schraubgewinde oder Gel (36), so dass sie über eine Höhe der Oberfläche des Substrats (14) erstrecken, um die künstlichen Defekte in Form der Kerben (34) replizieren.

5. Verfahren zum Herstellen eines Kalibrierblocks (10) nach Anspruch 1, wobei das Einsetzen des ausgeschnittenen Bereichs (22) Folgendes umfasst:
Bohren der Löcher (32) in das Grundmaterial (14) von der zweiten Seite (16b) zur ersten Seite (16a) verlaufend und unter Ausschluss der Bindeschicht (18) und der Wärmesperrschicht (19); und
Füllen der Löcher (32) aus dem ausgeschnittenen Bereich (22) mit den Defekten aus der Gasturbinenkomponente, um die ursprünglichen Defekte zu replizieren.

6. Kalibrierblock (10) zur Prüfung einer Gasturbinenkomponente (20), wobei der Kalibrierblock (10) **gekennzeichnet ist durch**
ein Substrat (12), das Folgendes besitzt:
ein Grundmaterial (14) mit einer ersten (16a) und einer ihr gegenüberliegenden zweiten (16b) Seite,
eine Bindeschicht (18) aus einer Nickellegierung, mit der das Grundmaterial (14) an seiner ersten Seite (16a) beschichtet ist, und
eine Wärmesperrschicht (19), mit der das Grundmaterial (14) auf der Nickellegierungsbindeschicht (18) beschichtet ist;
künstliche Defekte, die im Substrat (12) in Form von Löchern (32) und Kerben (34) konfiguriert sind, wobei die Löcher (32) im Grundmaterial (14) von der zweiten Seite (16b) zur ersten Seite (16a) verlaufen und die Bindeschicht (18) und die Wärmesperrschicht (19) ausschließen und in mindestens einige der Löcher (32) Schrauben oder Gel (36) eingearbeitet ist, die über eine Höhe der Oberfläche des Substrats (12) vorstehen, um die Kerben (34) zu bilden; und
in mindestens einige der Löcher (32) ein ausgeschnittener Bereich (22) von ursprünglichen Defekten der Gasturbinenkomponenten (20) eingearbeitet ist, um ursprüngliche Defekte im Substrat (12) zu replizieren.

7. Kalibrierblock (10) nach Anspruch 6, wobei Substrat (12) das Grundmaterial (14) von einer Dicke im Bereich von 3,5 mm bis 6 mm umfasst;
die Bindeschicht (18) aus einer Nickellegierung einen Bereich von 198 µm bis 200 µm besitzt; und
die Wärmesperrschicht (19) einen Bereich von 1450 µm bis 1750 µm besitzt.

8. Verfahren zur Prüfung der Gasturbinenkomponente (20) unter Verwendung des Kalibrierblocks (10) nach Anspruch 6 bis 7, wobei das Verfahren Folgendes umfasst:
Bereitstellen des Kalibrierblocks (10);
Vergleichen von Defekten aus der Gasturbinenkomponente (20) mit den ursprünglichen Defekten des eingesetzten Bereichs der Gasturbinenkomponente (20) und den künstlichen Defekten am Kalibrierblock (10) unter Verwendung der Infrarotthermographie;
Analysieren, ob die Gasturbinenkomponente (20) mit den Defekten eine vorgegebene technische Anforderung erfüllt, und
dann, wenn die vorgegebene technische Anforderung erfüllt ist, die Gasturbinenkomponente (20) in der Gasturbine verwendet wird oder
dann, wenn die vorgegebene technische Anforderung nicht erfüllt ist, die Gasturbinenkomponente (20) überholt/abgeschabt wird.

## Revendications

1. Procédé de fabrication d'un bloc d'étalonnage (10) pour l'inspection d'un composant de turbine à gaz (20), le procédé étant **caractérisé en ce qu'**il comprend :
la sélection du composant de turbine à gaz (20) composé d'un matériau prédéfini et recouvert d'une barrière thermique, à l'aide d'une thermographie à infrarouges, afin de définir une zone qui comprend des défauts sur ou en-dessous de la barrière thermique ;
la découpe de la zone (22) qui comprend les défauts du composant de turbine à gaz (20) ;
la configuration d'un substrat (12) ayant un matériau de base (14) avec un premier (16a) et un second (16b) côtés opposés, le premier côté (16a) du matériau de base (14) ayant un revêtement de liaison (18) et un revêtement de barrière thermique (19), dans lequel les matériaux de base du substrat (12) et du composant de turbine à gaz (20) sont identiques, et dans lequel les barrières thermiques sur le substrat (12) et le composant de turbine à gaz (20) sont identiques ;
la formation de défauts artificiels dans le substrat (12) ayant des orifices (32) et des encoches (34) ;
l'implantation de la zone de découpe (22) qui comprend les défauts du composant de turbine à gaz (20) sur le substrat (12), avec les défauts artificiels.

2. Procédé de fabrication du bloc d'étalonnage (10) selon la revendication 1, dans lequel la configuration du substrat (12) comprend en outre :
le fait de prévoir le matériau de base (14) d'une épaisseur comprise entre 3,5 mm et 6 mm ;
l'application du matériau de base (14) sur le premier côté (16a) de celui-ci avec le revêtement de liaison (18), le revêtement de liaison (18) étant composé d'un alliage de nickel et ayant une plage comprise entre 198 µm et 200 µm ; et
l'application du matériau de base (14) sur le premier côté (16a), par-dessus le revêtement de liaison (18), avec les barrières thermiques (19) ayant une plage comprise entre 1450 µm et 1750 µm.

3. Procédé de fabrication du bloc d'étalonnage (10) selon la revendication 1, dans lequel la formation de défauts artificiels sous la forme d'orifices (32) comprend en outre :
le perçage des orifices (32) sur le matériau de base (14) en s'étendant du second côté (16b) vers le premier côté (16a), et en excluant la liaison et les couches de revêtement contre la corrosion thermique (18), (19).

4. Procédé de fabrication du bloc d'étalonnage (10) selon la revendication 1, dans lequel la formation de défauts artificiels sous la forme d'encoches (34) comprend en outre :
le perçage des orifices (32) sur le matériau de base (14) en s'étendant du second côté (16a) vers le premier côté (16a), et en excluant la liaison et les couches de revêtement contre la corrosion thermique (18), (19) ; et
le remplissage des orifices (32) au moins avec une vis à filet ou du gel (36) afin de s'étendre au-dessus d'une hauteur de la surface du substrat (14) de façon à reproduire les défauts artificiels sous la forme d'encoches (34).

5. Procédé de fabrication du bloc d'étalonnage (10) selon la revendication 1, dans lequel l'implantation de la zone de découpe (22) comprend :
le perçage des orifices (32) sur le matériau de base (14) en s'étendant du second côté (16b) vers le premier côté (16a), et en excluant la liaison et les couches de revêtement contre la corrosion thermique (18), (19) ; et
le remplissage des orifices (32) depuis la zone de découpe (22) avec les défauts du composant de turbine à gaz de façon à reproduire les défauts d'origine.

6. Bloc d'étalonnage (10) pour l'inspection d'un composant de turbine à gaz (20), le bloc d'étalonnage (10) étant **caractérisé en ce qu'**il comprend :
un substrat (12) ayant
un matériau de base (14) avec un premier (16a) et un second (16b) côtés opposés,
une couche de liaison (18) composée d'un alliage de nickel sur le premier côté (16a) du matériau de base (14), et
une couche de barrière thermique (19) appliquée sur le premier côté (16a) du matériau de base (14) par-dessus la couche de liaison en alliage de nickel (18) ;
des défauts artificiels configurés dans le substrat (12) sous la forme d'orifices (32) et d'encoches (34), dans lequel les orifices (32) sur le matériau de base (14) s'étendent du second côté (16b) vers le premier côté (16a), en excluant la liaison et les couches de revêtement contre la corrosion thermique (18), (19), et, dans lequel au moins certains orifices (32) comprennent des vis ou du gel (36) qui dépassent au-dessus d'une hauteur du substrat (12) afin de former les encoches (34) ; et
au moins certains orifices (32) comprennent une partie découpée (22) des défauts d'origine des composants de turbine à gaz (20) afin de reproduire les défauts d'origine sur le substrat (12).

7. Bloc d'étalonnage (10) selon la revendication 6, dans lequel le substrat (12) comprend le matériau de base (14) d'une épaisseur comprise entre 3,5 mm et 6 mm ;
la couche de liaison (18) en alliage de nickel ayant une plage comprise entre 198 µm et 200 µm ; et une couche de barrières thermiques (19) ayant une plage comprise entre 1450 µm et 1750 µm.

8. Procédé d'inspection du composant de turbine à gaz (20) à l'aide du bloc d'étalonnage (10) selon les revendications 6 et 7, le procédé comprenant :
le fait de prévoir le bloc d'étalonnage (10) ;
la comparaison des défauts du composant de turbine à gaz (20) avec les défauts d'origine de la zone implantée du composant de turbine à gaz (20) et les défauts artificiels, sur le bloc d'étalonnage (10), à l'aide de la thermographie à infrarouges ;
l'analyse du fait que le composant de turbine à gaz (20) qui présente les défauts satisfasse ou non une exigence technique prédéterminée,
si l'exigence technique prédéterminée est satisfaite, le composant de turbine à gaz (20) est utilisé dans la turbine à gaz,
si l'exigence technique prédéterminée n'est pas satisfaite, le composant de turbine à gaz (20) est reconditionné/détruit.
